# EUROPÄISCHE PATENTSCHRIFT

(11) **EP 0 760 906 B1**
(45) Veröffentlichungstag und Bekanntmachung des Hinweises auf die Patenterteilung: **08.11.2000**
(21) Anmeldenummer: 96905751.2
(22) Anmeldetag: 09.03.1996
(51) Int. Cl.: F04B 53/12

(54) **KOLBENPUMPE**
PISTON PUMP
POMPE A PISTON

(30) Priorität: 24.03.1995 DE 19510745
(43) Veröffentlichungstag der Anmeldung: 12.03.1997
(73) Patentinhaber: ROBERT BOSCH GMBH, 70442 Stuttgart (DE)
(72) Erfinder: MÜLLER, Erwin, D-71272 Renningen (DE)
(86) Internationale Anmeldenummer: DE9600485
(87) Internationale Veröffentlichungsnummer: WO9630648

(56) Entgegenhaltungen:
- DE-A- 2 017 680
- FR-A- 1 583 650

## Beschreibung

### Stand der Technik

Die Erfindung betrifft eine Kolbenpumpe mit einem zu einer Hubbewegung antreibbaren Kolben, der eine Längsbohrung aufweist, in der ein Ventilschließkörper angeordnet ist, der von einer ebenfalls in der Längsbohrung befindlichen Ventilfeder gegen einen Ventilsitz gedrückt wird.

Durch das Dokument DE-A-2 017 680 ist eine Kolbenpumpe bekannt mit einem Kolben, der eine diesen in Längsrichtung durchziehende Stufenbohrung, einen als Kugel ausgebildeten Ventilschließkörper, einen im Innern der Stufenbohrung ausgebildeten Ventilsitz und eine Schraubendruckfeder als Ventilfeder aufweist, die mit ihrem den kleineren Durchmesser aufweisenden Windungsende am Ventilschließkörper angreift und sich mit ihrem den größeren Durchmesser aufweisenden Windungsende auf Stützlappen, die quer zur Stufenbohrung ausgerichtet radial in diese hineinragen, abstützt. Der für die Stützlappen benötigte im wesentlichen streifenartige Werkstoff wird vorzugsweise bereitgestellt durch Werkstoff aus der hülsenartig dünnen Wandung des Kolbens.

Durch das Dokument FR-A-1 583 650 ist eine weitere Kolbenpumpe bekannt mit einem Kolben, der eine diesen in Längsrichtung durchziehende Stufenbohrung, einen pilzförmig ausgebildeten Ventilschließkörper, einen innen befindlichen Ventilsitz und eine kegelige Schraubendruckfeder als Ventilfeder aufweist, die mit ihrem den kleineren Durchmesser aufweisenden Windungsende einen stilartigen Ansatz am Ventilschließkörper umfaßt und sich mit ihrem den größeren Durchmesser aufweisenden Windungsende an einer trichterartig geformten Übergangsfläche zwischen zwei Durchmessern der Stufenbohrung abstützt. Der Ventilsitz befindet sich an einem im wesentlichen ringscheibenartig gestalteten Bauteil, das in ein Ende des Kolbens, in dem sich der größere Durchmesser der Stufenbohrung befindet, abdichtend eingebaut ist. Vor dem abdichtenden Einbauen des den Ventilsitz aufweisenden Bauteils sind die Ventilfeder und der Ventilschließkörper in die Stufenbohrung einzusetzen. Ein Draht, aus dem die Ventilfeder gewunden ist, ist relativ dünn dargestellt, so daß das damit ausgerüstete Ventil aufgabengemäß bei sehr kleiner Druckdifferenz zu öffnen vermag und dieserart die Pumpe eine Ansaugfähigkeit bis zu 70 cm Quecksilbersäule erreichen kann.

Eine weitere derartige Kolbenpumpe ist bekannt durch das Dokument WO 95/00759. Bei dieser bekannten Kolbenpumpe ist der Ventilsitz an einer druckseitigen Mündung der Längsbohrung des Kolbens ausgebildet. Der Ventilschließkörper der bekannten Kolbenpumpe weist einen Ventilteller auf, dessen Dichtfläche bei geschlossenem Ventil am Ventilsitz anliegt. Vom Ventilteller erstreckt sich ein Schaft frei in die Längsbohrung des Kolbens. Am freien Ende des Schafts greift eine kegelstumpfförmig gewickelte Schraubendruckfeder mit ihrem Windungsende kleineren Durchmessers an. Das Windungsende größeren Durchmessers stützt sich gegen eine Innenringschulter nahe der druckseitigen Mündung der Längsbohrung des Kolbens ab und drückt so den Ventilteller gegen die Mündung der Längsbohrung. Dies hat den Nachteil, daß der Ventilteller die Längsbohrung verdeckt und dadurch den Blick auf die in der Längsbohrung befindliche Ventilfeder verwehrt, eine optische Kontrolle des richtigen Sitzes der Ventilfeder ist nicht oder allenfalls schwer möglich. Weiterer Nachteil ist, daß die vom Ventilteller abgedeckte Ventilfeder bei der Montage nicht zugänglich ist.

Um die am Ventilschaft angebrachte Ventilfeder im Kolben montieren zu können, weist die als Federsitz dienende Innenringschulter in der Längsbohrung des Kolbens eine Unterbrechung oder einen Vorsprung an einer Stelle ihres Umfangs auf. Der Ventilschließkörper wird zusammen mit der an ihm angebrachten Ventilfeder mit dem Ventilschaft voran in die Längsbohrung eingeführt und gedreht. Dabei gelangen die sich in Richtung des Windungsendes größeren Durchmessers erweiternden Windungen der kegelstumpfförmig gewickelten Schraubendruckfeder in Eingriff mit der Unterbrechung oder dem Vorsprung der Innenringschulter und "schrauben" sich hinter die Innenringschulter, bis das Windungsende größeren Durchmessers der Schraubendruckfeder die Ringschulter überwunden hat und an deren in die Längsbohrung weisenden Fläche anliegt. Diese Art der Montage hat den Nachteil, daß zusätzlich zu der Axialbewegung des Ventilschließkörpers eine Drehbewegung notwendig ist, wobei sichergestellt werden muß, daß die Ventilfeder vollständig hinter die Innenringschulter gelangt. Des weiteren muß die Durchbrechung oder der Vorsprung der Innenringschulter gefertigt werden, was zusätzlichen Aufwand bei der Herstellung verursacht.

### Vorteile der Erfindung

Bei der erfindungsgemäßen Kolbenpumpe mit den Merkmalen des Hauptanspruchs befindet sich der Ventilschließkörper im Innern der Längsbohrung des Kolbens, die Ventilschließfeder ist auf der druckseitigen Mündung der Längsbohrung zugewandten Seite des Ventilschließkörpers angeordnet, dies hat den Vorteil, daß die Ventilfeder durch die druckseitige Mündung der Längsbohrung des Kolbens, durch welche auch die Montage des Ventilschließkörpers und der Ventilfeder erfolgt, sichtbar und ihr richtiger Sitz optisch kontrolliert werden kann. Es erfolgt keine verdeckte Montage, die Ventilfeder ist bei der Montage direkt zugänglich. Weiterer Vorteil der Erfindung ist, daß die Montage der Schließfeder in Längsrichtung des Kolbens erfolgt, eine Drehbewegung ist nicht notwendig.

Bei der erfindungsgemäßen Kolbenpumpe setzt sich die Ventilfeder von ihren als Feder wirkenden, zwischen dem Ventilschließkörper und dem Federsitz befindlichen Windungen, über das am Federsitz anliegende Windungsende größeren Durchmessers hinweg in einen ins Innere der Längsbohrung des Kolbens verlaufenden Hubbegrenzungsabschnitt fort. Dieser nach innen verlaufende Abschnitt wird auch als Einzug bezeichnet. Er kann beispielsweise spiralförmig oder radial verlaufen. Bei maximaler Ventilöffnung stößt der Ventilschließkörper gegen diesen Hubbegrenzungsabschnitt. Der Vorteil einer Ventilhubbegrenzung ist eine verhältnismäßig kurze Ventilschließzeit bei kleiner Federkraft, bei der ein geringer Druckunterschied am Ventilschließkörper zum Öffnen ausreicht.

Die Unteransprüche betreffen vorteilhafte Weiterbildungen und Verbesserungen der im Hauptanspruch angegebenen Erfindung.

Sofern sich der Hubbegrenzungsabschnitt nicht in Höhe des Federsitzes befindet, sondern einen Abstand von diesem aufweisen soll, so kann die Ventilfeder gemäß Anspruch 2 zwischen ihrem Windungsende größeren Durchmessers und dem Hubbegrenzungsabschnitt mit einer axialen Komponente ins Innere der Längsbohrung oder auch aus dieser heraus verlaufend ausgebildet sein.

Als Federsitz kann gemäß dem Anspruch 5 eine Innenringschulter dienen, die auch Teil eines Innenflanschs sein kann, die umlaufend oder unterbrochen ausgebildet ist. Es können auch über den Umfang der Längsbohrung des Kolbens verteilt angeordnete, in radialer Richtung nach innen ragende Nasen als Federsitz dienen.

### Zeichnung

Die Erfindung wird nachfolgend anhand eines in der Zeichnung dargestellten Ausführungsbeispiels näher erläutert. Es zeigen:
- Figur 1: einen Achsschnitt durch eine erfindungsgemäße Kolbenpumpe und
- Figur 2: eine perspektivische Darstellung der Ventilfeder der in Figur 1 dargestellten Kolbenpumpe in anderem Maßstab.

### Beschreibung des Ausführungsbeispiels

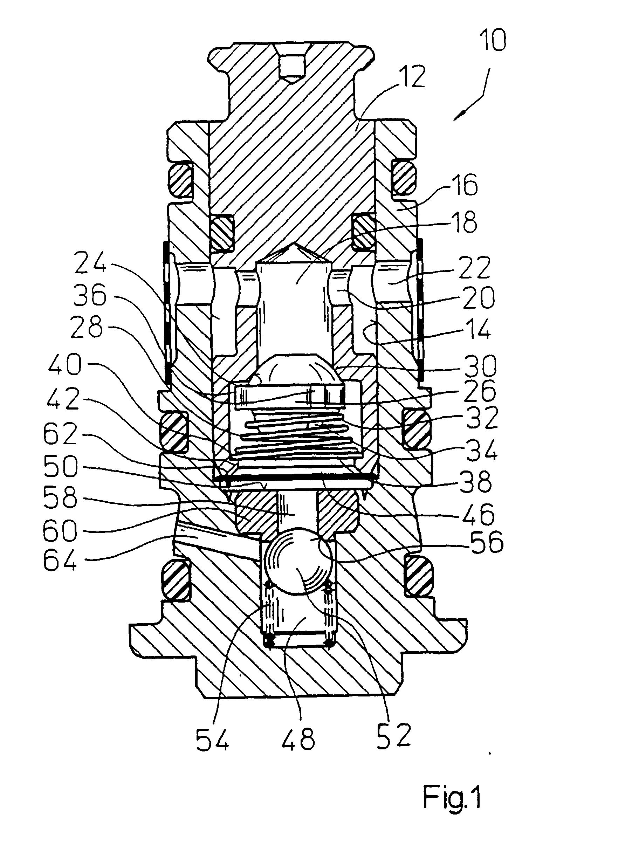

Die in Figur 1 dargestellte, insgesamt mit 10 bezeichnete, erfindungsgemäße Kolbenpumpe weist einen Kolben 12 auf, der in einer Zylinderbohrung 14 eines Zylinders 16 in axialer Richtung beweglich geführt ist.

Der Kolben 12 weist eine Längsbohrung 18 auf, die als Sackbohrung ausgeführt ist. An ihrem geschlossenen Ende kommuniziert die Längsbohrung 18 durch eine Querbohrung 20 im Kolben 12 hindurch mit Fluid-Zuführkanälen 22 im Zylinder 16.

Im Kolben 12 ist ein Pumpeneinlaßventil untergebracht: Dazu ist die Längsbohrung 18 gestuft ausgeführt, sie erweitert sich in ihrem Mittelbereich in Richtung ihres offenen Endes. An der Stufe ist eine konische Ventilsitzfläche 24 ausgebildet. Ein in der Längsbohrung 18 befindlicher Ventilschließkörper 26 wird von einer Schraubendruckfeder als Ventilfeder 28 gegen die Ventilsitzfläche 24 gedrückt. Der Ventilschließkörper 26 ist ein rotationssymmetrisches Kunststoff-Spritzgußteil beispielsweise aus PEEK (Polyether-Etherketon). Er hat eine kugelzonenförmige Dichtfläche 30, drei sternförmig radial abstehende Zentrierrippen 36 und setzt sich an seiner der Dichtfläche 30 abgewandten Seite einstückig mit einem Zapfen 34 fort. Der Zapfen 34 verjüngt sich in Richtung seines freien Endes. An seinem in den Ventilschließkörper 26 übergehenden Ende ist der Durchmesser des Zapfens 34 etwas größer als ein dort befindliches Windungsende 32 der Ventilfeder 28, das dort in eine umlaufende, im Querschnitt halbkreisförmige Nut (nicht sichtbar) des Ventilschließkörpers 26 eingreift.

Die Ventilfeder 28 ist eine kegelstumpfförmig gewickelte Schraubendruckfeder, d. h. ihr Windungsdurchmesser vergrößert sich von dem bereits genannten Windungsende 32 kleineren Durchmessers, das in die Nut des Ventilschließkörpers 26 eingreift, in Richtung eines Windungsendes 38 größeren Durchmessers.

Mit ihrem Windungsende 38 größeren Durchmessers stützt sich die Schraubendruckfeder 28 an einer Federsitzfläche 40 ab, die ein Innenflansch 42 am offenen Ende der Längsbohrung 18 des Kolbens 12 bildet. Zur Mündungsseite der Längsbohrung 18 hin erweitert sich der Innenflansch 42 konisch zur Bildung einer Einführschräge zur leichteren Montage der Schraubendruckfeder 28.

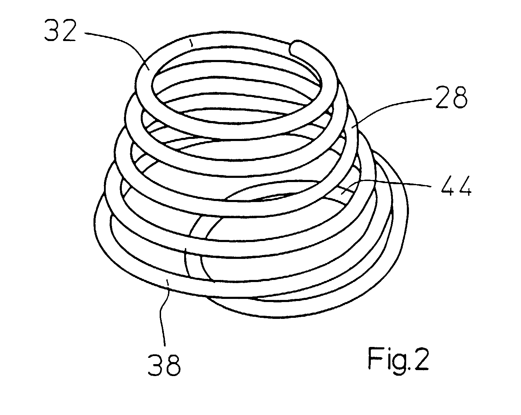

In Figur 2 ist die aus Metalldraht kegelstumpfförmig gewickelte, sich von ihrem Windungsende 32 kleineren Durchmessers zu ihrem Windungsende 38 größeren Durchmessers hin erweiternde, als Ventilfeder 28 dienende Schraubenfeder perspektivisch in größerem Maßstab dargestellt. Sie setzt sich über ihr Windungsende 38 größeren Durchmessers hinweg in einen Hubbegrenzungsabschnitt (Einzug) 44 fort, der deutlich nach innen und nahe einer Längsachse der Ventilfeder 28 vorbei verläuft. Gegen diesen Hubbegrenzungsabschnitt 44 stößt der Ventilschließkörper 26 mit seinem Zapfen 34 bei maximaler Ventilöffnung, der Ventilhub ist auf diese Weise begrenzt. Es ist nicht. zwingend erforderlich, daß die Ventilfeder 28 konisch gewickelt ist. Wesentlich ist, daß sie ein Windungsende 32 kleineren Durchmessers zum Eingriff in die Nut des Ventilschließkörpers 34 sowie ein Windungsende 38 größeren Durchmessers zur Anlage an der Federsitzfläche 40 aufweist.

Die Montage des Ventilschließkörpers 26 mit der an ihm angebrachten Ventilfeder 28 erfolgt in axialer Richtung des Kolbens 12 von der konisch abgeschrägten Mündung 46 der Längsbohrung 18 her. Die konische Ausbildung der Mündung 46 bewirkt ein radiales Zusammendrücken des Windungsendes 38 größeren Durchmessers der Ventilfeder 28, wodurch dieses durch den Innenflansch 42 im Kolben 12 hindurchgelangt, sich an dessen Innenseite elastisch aufweitet und dadurch in Anlage an die Federsitzfläche 40 gelangt.

Ein Auslaßventil ist in einer Sackbohrung 48 im Zylinder 16 untergebracht, die in einer der Mündung 46 der Längsbohrung 18 des Kolbens 12 gegenüberliegenden Stirnwand 50 der Zylinderbohrung 14 angebracht ist. Als Ventilschließkörper weist das Auslaßventil eine Ventilkugel 52 auf, die von einer sich am Grund der Sackbohrung 48 abstützenden Schraubendruckfeder 54 in Richtung des Kolbens 12 gegen eine zweite Ventilsitzfläche 56 gedrückt wird. Diese Ventilsitzfläche 56 des Auslaßventils befindet sich an einem mit einer Axialbohrung 58 versehenen Ventilsitzteil 60, das in einer stufenförmigen Erweiterung der Sackbohrung 48 durch Verstemmen 62 der Zylinderstirnwand 50 angebracht ist. In die Sackbohrung 58 mündet eine Querbohrung 64 als Fluidauslaß.

Der Zylinderbohrungsdurchmesser der Kolbenpumpe 10 ist im dargestellten und beschriebenen Ausführungsbeispiel der Erfindung ca. 8 mm. Die erfindungsgemäße Kolbenpumpe 10 ist zur Verwendung in einem Hydraulikblock zur Steuerung einer ABS- und ggf. ASR-Bremsanlage vorgesehen.

## Patentansprüche

1. Kolbenpumpe mit einem zu einer Hubbewegung antreibbaren Kolben (12), der eine Längsbohrung (18) aufweist, die mit einer Fluidzuführung (22) kommuniziert und in der ein Ventilschließkörper (26) von einer ein Windungsende (38) größeren Durchmessers und ein Windungsende (32) kleineren Durchmessers aufweisenden Schraubendruckfeder als Ventilfeder (28) gegen einen im Innern der Längsbohrung (18) ausgebildeten Ventilsitz (24) gedrückt wird, wobei die Ventilfeder (28) mit ihrem Windungsende (32) kleineren Durchmessers am Ventilschließkörper (26) angreift und sich mit ihrem Windungsende (38) größeren Durchmessers an einem Federsitz (40) abstützt, der an einem druckseitigen Ende des Kolbens (12) als Hinterschneidung in dessen Längsbohrung (18) ausgebildet ist **dadurch gekennzeichnet**, daß die Ventilfeder (28) über ihr Windungsende (38) größeren Durchmessers hinaus in einen nach innen verlaufenden Hubbegrenzungsabschnitt (44) übergeht.

2. Kolbenpumpe nach Anspruch 1, **dadurch gekennzeichnet**, daß der Hubbegrenzungsabschnitt (44) axial gegenüber dem Windungsende (38) größeren Durchmessers versetzt ist.

3. Kolbenpumpe nach einem der vorhergehenden Ansprüche, **dadurch gekennzeichnet**, daß der Ventilschließkörper (26) nach außen abstehende Zentrierrippen (36) aufweist.

4. Kolbenpumpe nach einem der vorhergehenden Ansprüche, **dadurch gekennzeichnet,** daß der Ventilschließkörper (26) einen Fortsatz (34) an seiner der Dichtfläche (30) abgewandten Seite zur Aufnahme der Ventilfeder (28) und/oder als Ventilhubbegrenzer aufweist.

5. Kolbenpumpe nach Anspruch 1, **dadurch gekennzeichnet**, daß der Federsitz (40) von einer umlaufenden oder unterbrochenen Innenringschulter oder von in die Längsbohrung (18) ragenden Nasen gebildet wird.

6. Kolbenpumpe nach Anspruch 1, **dadurch gekennzeichnet**, daß der Federsitz (40) mit dem Kolben (12) einstückig ist.

## Claims

1. Piston pump with a piston (12) which can be driven so as to perform a reciprocating motion and has a longitudinal hole (18) which communicates with a fluid feed (22) and in which a valve-closing member (26) is pressed against a valve seat (24) formed in the interior of the longitudinal hole (18) by a helical compression spring as valve spring (28) having a coil end (38) of larger diameter and a coil end (32) of smaller diameter, the valve spring (28) engaging by its coil end (32) of smaller diameter on the valve-closing member (26) and being supported by its coil end (38) of larger diameter on a spring seat (40) which is formed at a delivery end of the piston (12) as an undercut in the longitudinal hole (18) of the latter, characterized in that the valve spring (28) makes a transition beyond its coil end (38) of larger diameter into an inward-extending stroke-limiting portion (44).

2. Piston pump according to Claim 1, characterized in that the stroke-limiting portion (44) is offset axially relative to the coil end (38) of larger diameter.

3. Piston pump according to one of the preceding claims, characterized in that the valve-closing member (26) has outward-projecting centring ribs (36).

4. Piston pump according to one of the preceding claims, characterized in that the valve-closing member (26) has an extension (34) on its side facing away from the sealing surface (30) to accommodate the valve spring (28) and/or as a valve-stroke limiter.

5. Piston pump according to Claim 1, characterized in that the spring seat (40) is formed by an all-round or interrupted internal annular shoulder or by projections protruding into the longitudinal hole (18).

6. Piston pump according to Claim 1, characterized in that the spring seat (40) is in one piece with the piston (12).

## Revendications

1. Pompe à piston avec un piston (12) qui présente un alésage longitudinal (18), qui communique avec une alimentation de fluide (22), et dans laquelle un corps d'obturation (26) de soupape est pressé par un ressort de compression à boudin, servant de ressort de soupape, présentant une extrémité de spire (38) de grand diamètre et une extrémité de spire (32) de plus petit diamètre, contre un siège de soupape (24) constitué à l'intérieur de l'alésage longitudinal (18), le ressort de la soupape (28) venant en prise par l'extrémité de sa spire de plus petit diamètre sur le corps d'obturation de la soupape (26) et prenant appui par l'extrémité de sa spire (38) de plus grand diamètre sur un siège de ressort (40), qui est constitué à une extrémité du piston (12) située du côté sous pression sous la forme d'une contre-dépouille dans son alésage longitudinal (18),
caractérisée en ce que
le ressort de la soupape (28) se transforme au moyen de l'extrémité (38) de sa spire de plus grand diamètre au-delà en une section (44) de limitation de la course, qui s'étend vers l'intérieur.

2. Pompe à piston selon la revendication 1,
caractérisée en ce que
la section de limitation de la course (44) est décalée axialement par rapport à l'extrémité (38) de la spire de plus grand diamètre.

3. Pompe à piston selon l'une quelconque des revendications précédentes,
caractérisée en ce que
le corps d'obturation (26) de la soupape présente des nervures de centrage (36) se dressant vers l'extérieur.

4. Pompe à piston selon l'une quelconque des revendications précédentes,
caractérisée en ce que
le corps d'obturation (26) de la soupape présente un prolongement (34) sur son côté situé à l'opposé de la surface d'étanchéité (30) pour recevoir le ressort (28) de la soupape et/ou servir de limiteur de la course de la soupape.

5. Pompe à piston selon la revendication 1,
caractérisée en ce que
le siège (40) du ressort est formé par un épaulement annulaire intérieur périphérique ou interrompu, ou par des nez qui pénètrent dans l'alésage longitudinal (18).

6. Pompe à piston selon la revendication 1,
caractérisée en ce que
le siège (40) du ressort est d'un seul tenant avec le piston (12).
